# EUROPÄISCHE PATENTSCHRIFT

(11) **EP 2 127 007 B1**
(45) Veröffentlichungstag und Bekanntmachung des Hinweises auf die Patenterteilung: **08.06.2011**
(21) Anmeldenummer: 07711474.2
(22) Anmeldetag: 09.02.2007
(51) Int. Cl.: H01M 8/04

(54) **VERSORGUNGSSYSTEM UND WARNVORRICHTUNG FÜR EINEN BRENNSTOFFZELLENSTAPEL SOWIE VERFAHREN ZUR KONTROLLE DES VERSORGUNGSSYSTEMS**
SUPPLY SYSTEM AND WARNING DEVICE FOR A FUEL CELL STACK, AND METHOD FOR CONTROLLING THE SUPPLY SYSTEM
SYSTÈME D'ALIMENTATION ET DISPOSITIF D'AVERTISSEMENT POUR UN EMPILEMENT DE PILES À COMBUSTIBLE, AINSI QUE PROCÉDÉ POUR CONTRÔLER LE SYSTÈME D'ALIMENTATION

(43) Veröffentlichungstag der Anmeldung: 02.12.2009
(73) Patentinhaber: Daimler AG, 70327 Stuttgart (DE)
(72) Erfinder: Pasera, Uwe, 73732 Esslingen (DE); Steinhübl, Simon, 73271 Holzmaden (DE)
(74) Vertreter: JENSEN & SON
(86) Internationale Anmeldenummer: PCT/EP2007/001102
(87) Internationale Veröffentlichungsnummer: WO 2008/095512

(56) Entgegenhaltungen:
- WO-A-2004/017450
- JP-A- 2005 149 897
- US-A1- 2006 147 773

## Beschreibung

Die Erfindung betrifft ein Versorgungssystem für einen Brennstoffzellenstapel mit einer stellbaren Befeuchtungsvorrichtung, welche ausgebildet und/oder angeordnet ist, um ein Zuführgas, welches dem Brennstoffzellenstapel zugeführt wird, in Abhängigkeit von einem Stellsignal zu befeuchten, mit einer Entfeuchtungsvorrichtung, welche ausgebildet und/oder angeordnet ist, um ein Abgas, welches aus dem durch den Brennstoffzellenstapel geführten Zuführgas gebildet wird, zu entfeuchten und als entfeuchtetes Abgas abzugeben und mit einer Kontrollvorrichtung zur Erzeugung des Stellsignals sowie eine Warnvorrichtung und ein Verfahren zur Kontrolle dieses Versorgungssystems.

Brennstoffzellenstapel stellen in naher Zukunft eine mögliche Alternative zur mobilen Energiebereitstellung für Kraftfahrzeuge dar. Das längst bekannte Arbeitsverfahren von Brennstoffzellenstapeln basiert darauf, dass ein Brennstoff, oftmals Wasserstoff, mit einem Oxidanten, oftmals Umgebungsluft, elektrochemisch reagiert, wobei elektrische Energie generiert beziehungsweise aus chemischer Energie umgewandelt wird. Bei der Reaktion spielt eine Membran, welche oftmals als PEM (Proton-Exchange-Membrane) ausgebildet ist und während des elektrochemischen Prozesses den Brennstoff von dem Oxidanten trennt, eine zentrale Rolle. Diese Membran muss während des Betriebs des Brennstoffzellenstapels in definierten Grenzen befeuchtet gehalten werden, da eine zu geringe Befeuchtung zu einer Austrocknung und einem vorschnellen Verschleiß der Membran und eine zu hohe Befeuchtung zu einer Verminderung der Leistung des Brennstoffzellenstapels führen kann. Die Befeuchtung erfolgt üblicherweise über eine Befeuchtung der zugeführten Arbeitsgase.

Die Druckschrift DE 102 196 26 A1 offenbart ein Brennstoffzellensystem, wobei zur Steuerung der Befeuchtung ein Feuchtigkeitssensor benutzt wird, welcher die Feuchtigkeit der zuströmenden Arbeitsgase misst und auf Basis der Signale des Feuchtigkeitssensors eine Stellvorrichtung zur Kontrolle der Feuchtigkeit ansteuert, die als in Hinblick auf den Durchfluss stellbare Bypassleitung zu einem dem Brennstoffzellenstapel vorgeschalteten Befeuchter ausgebildet ist. Alternativ zu dem Feuchtigkeitssensor wird in dieser Druckschrift auch vorgeschlagen, eine "virtuelle Steuerung" zur Kontrolle der Feuchtigkeit zu verwenden, wobei dann die Stellvorrichtung in Abhängigkeit der Leistung des Brennstoffzellenstapels angesteuert wird.

Einen anderen Weg geht die Druckschrift WO 02/23660 A2, welche ebenfalls ein Verfahren zur Befeuchtung von Brennstoffzellen bzw. deren Membran vorschlägt. Bei dem Verfahren beziehungsweise der entsprechenden Vorrichtung wird die Steuerung einer Stelleinrichtung, welche als Ventil ausgebildet ist, in Abhängigkeit der Temperatur der Kühlwasserflüssigkeit der Brennstoffzellen vorgeschlagen.

Die Druckschrift JP 2005149897 A (Publication Number), die wohl den nächstkommenden Stand der Technik bildet, beschreibt ein Befeuchtungssystem für Brennstoffzellen. Ähnlich wie in der erst genannten Druckschrift wird auch hier eine Stellvorrichtung in Form einer Bypassleitung, welche eine Befeuchtungsvorrichtung umgeht, vorgeschlagen, wobei die Stellvorrichtung über eine Kontrollvorrichtung mittels eines Stellsignals angesteuert wird und das Stellsignal auf Basis von Temperaturmessungen des dem Brennstoffzellensystem zufließenden Gases beziehungsweise des von dem Brennstoffzellensystem abfließenden Gases in einem Bereich vor einem Entfeuchter erzeugt wird.

Der Erfindung liegt die Aufgabe zugrunde, ein Versorgungssystem und eine Warnvorrichtung für ein Brennstoffzellenstapel sowie ein Verfahren zur Kontrolle des Versorgungssystems vorzuschlagen, welches in technisch einfacher Weise eine zuverlässige Kontrolle der Feuchtigkeit im Bereich der Membran bzw. der Membranen eines Brennstoffzellenstapels ermöglicht.

Diese Aufgabe wird gelöst durch ein Versorgungssystem mit den Merkmalen des Anspruchs 1 mit einem Verfahren zur Kontrolle des Versorgungssystems mit den Merkmalen des Anspruchs 9 bzw. 11 und mit einer Warnvorrichtung mit den Merkmalen des Anspruchs 13. Bevorzugte oder vorteilhafte Ausführungsformen der Erfindung ergeben sich aus den Unteransprüchen, der nachfolgenden Beschreibung und/oder den beigefügten Figuren.

Erfindungsgemäß wird ein Versorgungssystem für ein Brennstoffzellenstapel vorgeschlagen, wobei der Brennstoffzellenstapel vorzugsweise eine Mehrzahl von Brennstoffzellen, insbesondere in PEM-Bauweise (Proton-Exchange-Membrane) aufweist. Beispielsweise sind über 100 Brennstoffzellen zu einem Stapel zusammengesetzt.

Das Versorgungssystem weist als ein Stellglied eine stellbare Befeuchtungsvorrichtung auf, welche ausgebildet und/oder angeordnet ist, um ein Zuführgas, welches dem Brennstoffzellenstapel zugeführt wird, in Abhängigkeit von einem Stellsignal zu befeuchten. Das Zuführgas ist als Kathoden- oder Anodengas, beispielsweise als Umgebungsluft beziehungsweise Wasserstoff ausgebildet, wobei insbesondere der Brennstoff aus einem betankbaren Tank optional reformerfrei zugeführt wird. Die Befeuchtungsvorrichtung erhöht die relative Feuchtigkeit des Zuführgases, wobei die relative Feuchtigkeit vorzugsweise als das prozentuales Verhältnis zwischen dem momentanen Wasserdampfdruck und dem Sättigungswasserdampfdruck definiert ist. Insbesondere ist bei 100 % relativer Feuchtigkeit das Zuführgas vollständig mit Wasserdampf gesättigt. Bei Überschreitung von 100 % schlägt sich die überschüssige Feuchtigkeit meist als Kondenswasser beziehungsweise Nebel nieder. Die Erhöhung der relativen Feuchtigkeit wird in Abhängigkeit von dem Stellsignal eingestellt, so dass das von dem Stellsignal angesteuerte Stellglied die Höhe der relativen Feuchtigkeit des Zuführgases stellt.

Ferner ist eine Entfeuchtungsvorrichtung in dem Versorgungssystem integriert, die ein Abgas aus dem Brennstoffzellenstapel, welches dem verbrauchten oder teilverbrauchten Zuführgas entspricht, entfeuchtet, so dass ein entfeuchtetes Abgas gebildet wird. Mit der Entfeuchtungsvorrichtung wird verwertbare Flüssigkeit, insbesondere Wasser, dem Abgas entzogen und kann in einem Kreislauf dem Versorgungssystem und damit dem Brennstoffzellenstapel wieder zugeführt werden.

Schließlich ist eine Kontrollvorrichtung zur Erzeugung des Stellsignals vorgesehen, wobei das Stellsignal vorzugsweise elektrisch, insbesondere digital, aber auch mechanisch ausgebildet sein kann.

Erfindungsgemäß wird vorgeschlagen, dass die Kontrollvorrichtung insbesondere programmtechnisch und/oder schaltungstechnisch ausgebildet ist, das Stellsignal auf Basis der Gastemperatur des entfeuchteten Abgases zu erzeugen. Die Kontrollvorrichtung ist dabei bevorzugt als Prozessoreinheit, wie zum Beispiel Mikrocontroller, DSP, ASIC oder dergleichen ausgebildet. Zur Messung der Gastemperatur des entfeuchteten Abgases ist vorzugsweise ein Temperatursensor in dem Versorgungssystem integriert, wobei zur Vermeidung oder Minimierung von Messfehlern der Temperatursensor vorzugsweise unmittelbar am und/oder nahe dem Ausgang der Entfeuchtungsvorrichtung angeordnet oder in der Entfeuchtungsvorrichtung integriert ist.

Bei einer praktischen Umsetzung der Erfindung wird das Stellsignal auf Basis der Temperaturdifferenz zwischen dem Abgas und dem entfeuchteten Abgas erzeugt. Zur Bestimmung der Temperaturdifferenz können beispielsweise ein Differenztemperatursensor oder zwei separate Temperatursensoren eingesetzt werden. Statt der Temperatur des Abgases kann auch an einer anderen Messstelle eine Temperatur gemessen werden, solange diese in einem ausreichend vorherzusagenden Zusammenhang mit der Temperatur des Abgases steht. Anders ausgedrückt sind auch Relativmessungen für die Messung der Temperatur des Abgases im Rahmen der Erfindung.

Mit der Erfindung wird der Vorteil erreicht, mit einem vertretbaren Kosten- und Platzbedarf eine Kontrolle, insbesondere Regelung oder Steuerung, der Feuchtigkeit am Brennstoffzellenstapeleingang bzw. -ausgang und damit auch an den Membranen der Brennstoffzellen umzusetzen.

Die Erfindung geht dabei von der Überlegung aus, dass durch den Entzug von Feuchtigkeit aus dem Abgas in der Entfeuchtungsvorrichtung die relative Feuchtigkeit des Abgases über die Lauflänge der Entfeuchtungsvorrichtung sinkt, so dass das Abgas wieder in die Lage versetzt wird, flüssiges Wasser mittels erneuter Verdunstung aufzunehmen. Diese Verdunstung benötigt jedoch Energie, die dem Abgas entzogen wird und deren Entzug zu einer Abkühlung des Abgases führt. Die resultierende Temperaturdifferenz zwischen Entfeuchtungsvorrichtungseingang und Entfeuchtungsvorrichtungsausgang beziehungsweise zwischen Abgas und entfeuchtetem Abgas ist ein Nachweis dafür, dass flüssiges Wasser vorhanden war und verdunstet wurde. Der Temperaturunterschied fällt dabei umso größer aus, je mehr Wasser verdunstet wird, das heißt je feuchter das Abgas aus dem Brennstoffzellenstapel ist. In Umsetzung der Überlegung ist es möglich, die Ausgangsfeuchtigkeit des Abgases aus dem Brennstoffzellenstapel auf Basis der Temperatur des entfeuchteten Abgases oder auf Basis der Temperaturdifferenz zwischen Abgas und entfeuchteten Abgas ausreichend genau zu bestimmen. In Kenntnis der Brennstoffzellenstapelausgangsfeuchtigkeit und weiterer Betriebsparameter kann dann die Eingangsfeuchte des Zuführgases am Brennstoffzellenstapel abgeschätzt oder bestimmt werden. Somit bildet die Temperaturmessung beziehungsweise die Differenztemperaturmessung eine Relativmessung für die Eingangsfeuchte des Zuführgases am Brennstoffzellenstapel, wobei es möglich ist, ein Stellsignal durch die Kontrollvorrichtung zu erzeugen, welches die Befeuchtungsvorrichtung so beeinflusst, dass gewünschte Feuchtigkeitsbedingungen für den Brennstoffzellenstapel eingestellt sind.

Weitere Vorteile im Gegensatz zum bekannten Stand der Technik ergeben sich auch daraus, dass fertigungsbedingte Toleranzen des Brennstoffzellenstapels oder der Befeuchtungsvorrichtung durch die Kontrollvorrichtung oder durch eine Kalibrierung der Kontrollvorrichtung berücksichtigt werden können, da das Versorgungssystem eine Rückmeldung über den tatsächlichen Betriebszustand des Brennstoffzellenstapels bereitstellt.

Anders ausgedrückt kann über den Zusammenhang der Gasfeuchtigkeit am Brennstoffzellenstapelausgang mit der Temperaturdifferenz zwischen Brennstoffzellenstapelausgang und Entfeuchtungsvorrichtungsausgang die relative Feuchtigkeit des aus dem Brennstoffzellenstapel kommenden Abgases in einem bestimmten Bereich hinreichend genau bestimmt werden. Damit erlaubt das Versorgungssystem auch die Brennstoffzellenstapeleingangsfeuchtigkeit mithilfe des Stellglieds der stellbaren Befeuchtungsvorrichtung so zu verändern, dass sich das gewünschte Feuchteniveau am Brennstoffzellenstapelausgang und -eingang einstellt.

Bei einer bevorzugten Ausführungsform ist in der Kontrollvorrichtung eine Mehrgrößenregelung und/oder -steuerung implementiert, so dass das Stellsignal optional unter Verwendung weiterer Eingangsgrößen, wie zum Beispiel Brennstoffzellenstapeltemperatur, Druck, abgegebener Brennstoffzellenstapelstrom und/oder Luftstöchiometrie erzeugt und/oder erzeugbar ist und/oder weitere Stellglieder wie z.B. die Kühlwassertemperatur des Brennstoffzellenstapels, der Systemdruck und/oder die Luftstöchiometrie stellbar sind. In Kenntnis der optionalen weiteren Eingangsgrößen ist es beispielsweise möglich, den Zusammenhang zwischen relativer Feuchtigkeit am Brennstoffzellenstapelausgang und -eingang genauer zu bestimmen.

Bei einer bevorzugten Weiterbildung sind die Befeuchtungsvorrichtung und Entfeuchtungsvorrichtung als Gas-zu-Gas-Befeuchter ausgebildet, welcher insbesondere eine passive Funktionsweise hat. Durch diese bevorzugte Weiterbildung wird eine besonders kompakte Ausgestaltung des Versorgungssystems erreicht, zudem wird die dem Abgas entzogene Flüssigkeit dem Zuführgas Betriebsstoff sparend zugeführt. Beispielsweise weist der Gas-zu-Gas-Befeuchter einen feuchten Bereich und einen trockenen Bereich auf, welche durch eine Membran getrennt sind, durch die Flüssigkeit diffundieren kann. Insbesondere ist die Entfeuchtungsvorrichtung so ausgebildet, dass im Betrieb im feuchten Bereich flüssiges Wasser vorhanden ist, welches durch das teilentfeuchtete Gas wieder aufgenommen werden kann.

Das Stellglied der Befeuchtungsvorrichtung ist bei einer bevorzugten konstruktiven Umsetzung als eine Bypassleitung mit einer stellbaren Ventilvorrichtung ausgebildet, wobei die Bypassleitung die Befeuchtungsvorrichtung umgeht. Diese Ausführungsform berücksichtigt, dass die Befeuchtungsbeziehungsweise Entfeuchtungsvorrichtung beziehungsweise der Gas-zu-Gas-Befeuchter optional auf Volllast des Brennstoffzellenstapels ausgelegt ist, so dass die Luftfeuchtigkeit Brennstoffzellenstapeleingangs bei Teillastbetrieb zu hoch ist und mithilfe der über die Ventilvorrichtung durchflusskontrollierten Bypassleitung gesenkt wird. Die Ventilvorrichtung ist dabei vorzugsweise als eine Drosselvorrichtung ausgebildet.

Bei einer bevorzugten Ausführungsform ist das Versorgungssystem durch einen Arbeitsbereich für die relative Feuchtigkeit des Abgases zwischen 80 % und 100 % gekennzeichnet. Zum einen ist dieser Arbeitsbereich vorteilhaft für einen schonenden Betrieb der Membran des Brennstoffzellenstapels, zum anderen sind die Temperaturmessungen in diesem Arbeitsbereich besonders aussagekräftig.

Bei einer robusten Umsetzung ist zur Erzeugung des Stellsignals ein Regelkreis vorgesehen, wobei die Regelgröße auf der Gastemperatur des entfeuchteten Abgases und/oder auf der Differenztemperatur zwischen Abgas und entfeuchteten Abgas basiert oder als diese ausgebildet ist.

Ein nächster Gegenstand der Erfindung betrifft ein Verfahren zur Kontrolle des soeben beschriebenen Versorgungssystems, wobei ein erster Betriebsmodus genutzt wird, in welchem eine Kühlwassertemperatur zur Kühlung des Brennstoffzellenstapels lastabhängig, also in Abhängigkeit des erzeugten Stromes und/oder der erzeugten Energie, eingestellt wird und das Stellsignal in Abhängigkeit der Temperaturdifferenz zwischen Abgas und entfeuchtetem Abgas kontrolliert wird. In diesem ersten Betriebsmodus wird die Kühlwassertemperatur beispielsweise über feste Kennfelder oder Look-Up-Tables abhängig von der Last eingestellt und die Feuchtigkeit am Brennstoffzelleneingang mit dem Stellglied anhand der Temperaturdifferenz kontrolliert oder geregelt. Dadurch lässt sich anhand von weiteren Betriebsbedingungen, wie zum Beispiel Brennstoffzellenstapelstrom, Luftstöchiometrie, Kühlwassertemperatur, Druck und die Eingangstemperatur des Zuführgases, die Feuchtigkeit im Brennstoffzellenstapel bestimmen und kontrollieren. Die Luftstöchiometrie bezeichnet das Verhältnis von der der Brennstoffzelle zugeführten Luftmenge zu der zur Verbrennung notwendigen Luftmenge. Statt der Luftstöchiometrie kann im Allgemeinen auch der Luftmassenstrom als Betriebsparameter verwendet werden. Der Vorteil dieses ersten Betriebsmodus liegt insbesondere darin, dass die Kühlwassereingangstemperatur relativ schnell anhand eines Kennfeldes einstellbar ist und die Feuchtigkeit nur durch das Stellglied kontrolliert wird.

Bei einer Ergänzung des ersten Betriebsmodus wird der Systemdruck (Gasdruck) in dem Brennstoffzellenstapel soweit wie möglich gesenkt. Die Einstellung der Feuchtigkeit erfolgt mit dem Stellglied, so dass bei einer gewünschten Feuchtigkeit der höchst mögliche Systemwirkungsgrad erreichbar ist. Zusätzliche Vorteile dieser Abwandlung sind darin zu sehen, dass der niedrige Systemdruck auch eine geringe Schallabstrahlung bewirkt und dass sich das Versorgungssystem dynamisch und zugleich einfach regeln lässt.

Bei einem zweiten möglichen Betriebsmodus werden sowohl die Kühlwassertemperatur als auch das Stellsignal in Abhängigkeit der Temperatur des entfeuchteten Abgases und/oder der Temperaturdifferenz zwischen Abgas und entfeuchtetem Abgas eingestellt bzw. geregelt. Mit diesem zweiten Betriebsmodus kann im Brennstoffzellenstapel ein gewünschtes Feuchtigkeitsprofil, beispielsweise wie in einem Winterbetrieb, hinsichtlich der Ein- und Ausgangsfeuchte bei möglichst niedriger Kühlwassertemperatur eingestellt werden, was positiv für die Lebensdauer der einzelnen Brennstoffzellen ist.

Bei weiteren Abwandlungen des zweiten Betriebsmodus werden zudem der Systemdruck und/oder die Luftstöchiometrie in Abhängigkeit der Temperatur des entfeuchteten Gases und/oder der Temperaturdifferenz zwischen Abgas und entfeuchtetem Abgas eingestellt, eingeregelt und/oder kontrolliert. Auch bei dieser Abwandlung sind Vorteile hinsichtlich einer möglichst niedrigen Kühlwassertemperatur und somit verlängerten Brennstoffzellenlebensdauer, einem hohen Systemwirkungsgrad aufgrund des niedrigen Systemdrucks und eine geringe Schallabstrahlung als Vorteile zu sehen.

Zusammenfassend wird ein System zur Kontrolle, insbesondere Steuerung oder Regelung, der Feuchtigkeit am Brennstoffzellenstapeleingang und/oder -ausgang basierend auf der Temperatur beziehungsweise der Temperaturdifferenz zwischen Brennstoffzellenstapelausgang und Entfeuchtungsvorrichtungsausgang vorgeschlagen. Durch den Zusammenhang der Luftfeuchtigkeit am Brennstoffzellenstapelausgang mit der Temperaturdifferenz zwischen Brennstoffzellenstapelausgang und Entfeuchtungsvorrichtungsausgang kann man den Feuchtigkeitsgehalt der Abgase, die aus dem Brennstoffzellenstapel kommen, in einem bestimmten Arbeitsbereich näherungsweise bestimmen. Die Brennstoffzellenstapeleingangsfeuchtigkeit kann mithilfe des Stellgliedes so verändert werden, dass sich das gewünschte Feuchtigkeitsniveau am Brennstoffzellenstapelausgang und damit -eingang einstellt. Die Brennstoffzellenstapelausgangsfeuchte steht im direkten Zusammenhang mit der -eingangsfeuchte, wenn die Betriebsbedingungen wie Temperatur, Druck, Brennstoffzellenstapelstrom und Luftstöchiometrie bekannt sind. Dieses Kontrollprinzip macht es möglich auf Dauer unterschiedliche Feuchteniveaus im Brennstoffzellenstapel einzustellen, wie es beispielsweise für die Einstellung im Sommer- beziehungsweise Winterbetrieb notwendig sein kann, wobei sich Sommer- und Winterbetrieb durch verschiedene gewünschte Feuchteniveaus am Ausgang der trockenen Seite der Befeuchtungsvorrichtung unterscheiden. Durch die Erfassung der Temperaturdifferenz erhält man während des Betriebs des Brennstoffzellenstapels im Fahrzeug eine Rückmeldung über den Feuchtigkeitszustand des Brennstoffzellenstapels und kann - wenn nötig - Sofortmaßnahmen beziehungsweise Anpassungen einleiten. Dadurch wird im Normalzustand der Betrieb des Brennstoffzellenstapels stabiler, insbesondere treten weniger leistungsverminderte Brennstoffzellen auf, und im Fehlerfall kann sofort reagiert werden, was förderlich für die Brennstoffzellenlebensdauer sein wird. Bei einer optionalen Ergänzung durch eine Systemdruckregelung sind auch positive Auswirkungen auf den Systemwirkungsgrad zu erwarten. Dabei ist das beschriebene Messprinzip der Feuchtigkeit relativ kostengünstig zu realisieren.

Ein nächster Gegenstand der Erfindung, der auf dem gleichen erfinderischen Gedanken beruht, ist eine Warnvorrichtung für ein Versorgungssystem für einen Brennstoffzellenstapel vorzugsweise nach einem der vorhergehenden Ansprüche mit einer bzw. der Entfeuchtungsvorrichtung, die angeordnet und/oder ausgebildet ist, um aus dem Brennstoffzellenstapel austretende Abgase zu entfeuchten und dabei in entfeuchtete Abgase umzuwandeln, und mit einer bzw. der Kontrollvorrichtung zur Erzeugung eines Kontrollsignals. Erfindungsgemäß wird das Kontrollsignal auf Basis der Temperaturdifferenz zwischen Abgas und entfeuchtetem Abgas erzeugt. Die Warnvorrichtung weist insbesondere hinsichtlich des Mess- und Auswerteprinzips optional eine beliebige Auswahl der Merkmale des zuvor beschriebenen Versorgungssystems auf.

Weitere Vorteile, Merkmale und Wirkungen der Erfindung ergeben sich aus der nachfolgenden Beschreibung eines bevorzugten Ausführungsbeispiels der Erfindung sowie den beigefügten Figuren. Dabei zeigen:
- Fig. 1: ein Brennstoffzellenvorrichtung mit einem Versorgungssystem in schematischer Darstellung als ein Ausführungsbeispiel der Erfindung;
- Fig. 2: ein Messdiagramm zur Illustration der Funktionsweise der Erfindung.

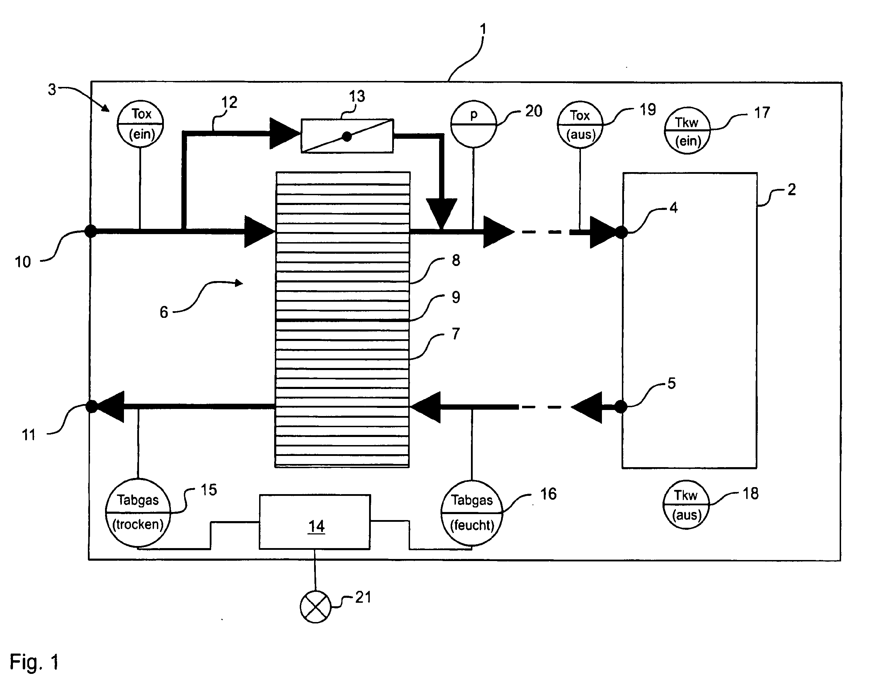

Die Fig. 1 zeigt eine Brennstoffzellenvorrichtung 1, welche beispielsweise in einem Fahrzeug, insbesondere Kraftfahrzeug als mobile Energiequelle einsetzbar ist. Die Brennstoffzellenvorrichtung 1 ist nur schematisch in Teilen dargestellt und weist einen Brennstoffzellenstapel 2 sowie ein schematisch dargestelltes Versorgungssystem 3 zur Versorgung des Brennstoffzellenstapels 2 mit Arbeitsgasen auf. In Fig. 1 wird durch das Gasversorgungssystem 3 die Kathodenseite des Brennstoffzellenstapels 2 versorgt. Bei alternativen Ausführungsformen kann durch ein derartiges, aber entsprechend angepasstes Gasversorgungssystem 3 auch die Anodenseite des Brennstoffzellenstapels 2 versorgt werden.

Das Gasversorgungssystem 3 ist an dem Brennstoffzellenstapel 2 mit einem Gaseinlass 4 und einem Gasauslass 5 strömungstechnisch angekoppelt, so dass ein Zuführgas durch den Gaseinlass 4 und danach durch den Brennstoffzellenstapel 2 strömen und als Abgas den Brennstoffzellenstapel 2 durch den Gasauslass 5 verlassen kann. Zur Konditionierung des Zuführgases beziehungsweise des Abgases weist das Gasversorgungssystem 3 eine Befeuchtungsvorrichtung 6 auf, welche einen Entfeuchtungsabschnitt 7 zur Entfeuchtung der Abgase und einen Befeuchtungsabschnitt 8 zur Befeuchtung der Zuführgase umfasst. Entfeuchtungs- und Befeuchtungsabschnitt 7 beziehungsweise 8 sind durch eine Membran 9 voneinander getrennt. Die Befeuchtungsvorrichtung 6 ist beispielsweise als passiver Gas-zu-Gas-Befeuchter ausgebildet.

Der Gasströmungsverlauf in dem Gasversorgungssystem 3 beginnt bei einer Eingangsschnittstelle 10, über die ein Oxidant, insbesondere Umgebungsluft, zugeführt wird und zu dem Befeuchtungsabschnitt 8 geleitet wird. In dem Befeuchtungsabschnitt 8 wird der Oxidant mit Wasser befeuchtet, so dass dessen relative Feuchtigkeit erhöht wird, und nachfolgend zu dem Gaseinlass 4 als Zuführgas geleitet. Nach Durchquerung des Brennstoffzellenstapels 2 tritt das nunmehr in Abgas gewandelte Zuführgas durch den Gasauslass 5 aus und wird zu dem Entfeuchtungsabschnitt 7 der Befeuchtungsvorrichtung 6 geführt, in welchem das Abgas entfeuchtet wird, so dass ein entfeuchtetes Abgas erzeugt wird. Das entfeuchtete Abgas wird schließlich zu einer Ausgangsschnittstelle 11 geführt und beispielsweise in die Umgebung ausgestoßen. Die von dem Abgas entzogene Flüssigkeit (Wasser) wird über die Membran 9 zur Befeuchtung des Zuführgases in den Befeuchtungsabschnitt 8 geführt.

Zur Einstellung der relativen Feuchtigkeit des Zuführgases weist das Gasversorgungssystem 3 einen Bypass 12 auf, welcher über eine Drosselvorrichtung 13 im Durchfluss einstellbar ist. Die Kombination der Bypassleitung 12 und der Drosselvorrichtung 13 bildet somit ein Stellglied zur Stellung des Feuchtigkeitsgehalts des Zuführgases. Dieses Stellglied ist sinnvoll, da die Befeuchtungsvorrichtung 6 üblicherweise auf den Maximaldurchfluss an Zuführgas ausgelegt ist und insbesondere bei Teillast des Brennstoffzellenstapels 2 eine zu hohe Feuchtigkeit in das Zuführgas einbringen würde. Durch die Bypassleitung 12 wird ein Teil des Zuführgases um die Befeuchtungsvorrichtung 6 herumgeleitet, so dass nur der verbleibende Teil befeuchtet und anschließend wieder mit dem trockenen Anteil des Zuführgases gemischt wird, wobei als Resultat ein teilbefeuchtetes Zuführgas gebildet wird.

Zur Ansteuerung der stellbaren Drosselvorrichtung 13 ist eine Kontrollvorrichtung 14 vorgesehen, welche als Eingangssignale ein Messsignal von einem ersten Temperatursensor 15, welcher zur Messung der Temperatur des entfeuchteten Abgases T_{Abgas} (trocken) am Ausgang der Befeuchtungsvorrichtung 6 angeordnet ist, und von einem zweiten Temperatursensor 16, welcher am Gasauslass 5 des Brennstoffzellenstapels 2 und/oder am Eingang zu der Befeuchtungsvorrichtung 6 angeordnet ist und zur Messung der Temperatur des Abgases T_{Abgas} (feucht) ausgebildet ist. Die Differenz der Temperaturen ΔT stellt eine Relativmessung für die Feuchtigkeit, insbesondere die relative Feuchtigkeit, des aus dem Gasauslass 5 strömenden Abgases dar. Unter optionaler Verwendungen weiterer Messgrößen, wie zum Beispiel der Kühlwassereingangstemperatur T_{KW}(ein) des Temperatursensors 17, der Kühlwasserausgangstemperatur T_{KW}(aus) des Sensors 18, der Temperatur des Zuführgases T_{OX}(ein) vor der Befeuchtungsvorrichtung 6 bei dem Sensor 3, beziehungsweise am Gaseinlass 4 durch den Sensor T_{OX}(aus) 19 und/oder Drucksignale p durch den Systemdrucksensor 20, kann auch die Feuchtigkeit, insbesondere die relative Feuchtigkeit des Zuführgases am Gaseinlass 4 bestimmt werden.

Die Feuchtigkeit am Gaseinlass 4 beziehungsweise Gasauslass 5 wird in einem in der Kontrollvorrichtung 14 implementierten Regelkreis als Regelgröße genutzt, wobei der Regelkreis auf die Drosselvorrichtung 13 als Stellglied zugreift. Mithilfe des Regelkreises ist es möglich, das Feuchtigkeitsniveau innerhalb des Brennstoffzellenstapels 2 über die Drosselvorrichtung 13 gezielt über ein Stellsignal einzustellen.

Optional wird die Kontrollvorrichtung 14 auch als Warnvorrichtung genutzt, wobei bei Überschreiten beziehungsweise Unterschreiten von vordefinierten Feuchtigkeitsgrenzen des Zuführgases beziehungsweise des Abgases ein Warnsignal an eine Warnvorrichtung 21 ausgegeben wird.

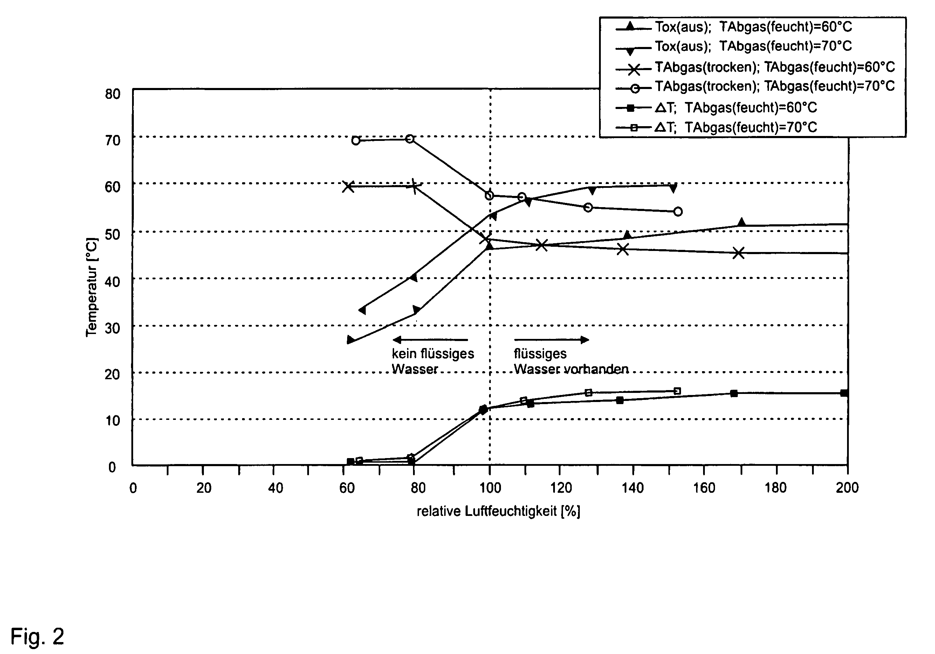

Die Fig. 2 illustriert den Zusammenhang zwischen der Temperaturdifferenz zwischen Abgas und entfeuchteten Abgas und der relativen Feuchtigkeit des Zuführgases (f(relative Feuchtigkeit, ΔT)).

Wie aus den Kurvenverlauf der Graphen ΔT deutlich zu entnehmen ist, ist die Temperaturdifferenz unter 80 % relativer Feuchtigkeit gleich 0 und oberhalb von 100 % Luftfeuchtigkeit bei einem konstanten Wert. Das bedeutet, dass zwischen 80 % und 100 % relativer Feuchtigkeit die Differenztemperatur ein aussagekräftiger Relativmesswert für die relative Luftfeuchtigkeit des Abgases ist.

## Patentansprüche

1. Versorgungssystem (3) für einen Brennstoffzellenstapel (2)
mit einer stellbaren Befeuchtungsvorrichtung (13,8), welche ausgebildet und/oder angeordnet ist, um ein Zuführgas, welches dem Brennstoffzellenstapel (2) zugeführt wird, in Abhängigkeit von einem Stellsignal zu befeuchten,
mit einer Entfeuchtungsvorrichtung (7), welche ausgebildet und/oder angeordnet ist, um ein Abgas, welches aus dem durch den Brennstoffzellenstapel (2) geführten Zuführgas gebildet wird, zu entfeuchten und als entfeuchtetes Abgas abzugeben,
und mit einer Kontrollvorrichtung (14) zur Erzeugung des Stellsignals,
**dadurch gekennzeichnet, dass**
die Kontrollvorrichtung (14) ausgebildet ist, das Stellsignal auf Basis der Gastemperatur (T_{Abgas}(trocken)) des entfeuchteten Abgases zu erzeugen.

2. Versorgungssystem (3) nach Anspruch 1, **dadurch gekennzeichnet, dass** das Stellsignal auf Basis der Temperaturdifferenz (ΔT) zwischen Abgas und entfeuchtetem Abgas erzeugt wird.

3. Versorgungssystem (3) nach Anspruch 1 oder 2, **gekennzeichnet durch** eine Mehrgrößenregelung oder - steuerung, so dass das Stellsignal unter Verwendung weiterer Größen, bevorzugt Brennstoffzellenstapeltemperatur (T_{KW}(ein), T_{KW}(aus)), Druck (p), abgegebener Brennstoffzellenstapelstrom und/oder Luftstöchiometrie erzeugt ist und/oder erzeugbar ist.

4. Versorgungssystem (3) nach einem der vorhergehenden Ansprüche, **dadurch gekennzeichnet, dass** die Befeuchtungsvorrichtung (7) und die Entfeuchtungsvorrichtung (8) als Gas-zu-Gas-Befeuchter (6) ausgebildet sind.

5. Versorgungssystem (3) nach einem der vorhergehenden Ansprüche, **dadurch gekennzeichnet, dass** die Befeuchtungsvorrichtung (8) eine Stellvorrichtung (13) aufweist, die in Abhängigkeit des Stellsignals die Befeuchtung einstellt, wobei die Stellvorrichtung als eine Bypassleitung (12) mit einer Ventilvorrichtung (13) ausgebildet ist.

6. Versorgungssystem (3) nach einem der vorhergehenden Ansprüche, **gekennzeichnet durch** einen Arbeitsbereich für die relative Feuchte des Abgases zwischen 80 % und 100 %.

7. Versorgungssystem (3) nach einem der vorhergehenden Ansprüche, **dadurch gekennzeichnet, dass** zur Erzeugung des Stellsignals ein Regelkreis vorgesehen ist, wobei die Regelgröße auf der Gastemperatur des entfeuchteten Abgases (T_{Abgas}(trocken)) und/oder der Temperaturdifferenz zwischen Abgas und entfeuchtetem Abgas (ΔT) basiert oder als diese ausgebildet ist.

8. Versorgungssystem (3) nach einem der vorhergehenden Ansprüche, **dadurch gekennzeichnet, dass** es programmtechnisch und/oder schaltungstechnisch ausgebildet ist, um das Verfahren der nachfolgenden Ansprüche durchzuführen.

9. Verfahren zur Kontrolle des Versorgungssystem (3) nach einem der vorhergehenden Ansprüche mit einem Betriebsmodus, wobei eine Kühlwassertemperatur (T_{KW}(ein)) des Brennstoffzellenstapels (2) lastabhängig eingestellt wird und das Stellsignal in Abhängigkeit der Temperaturdifferenz zwischen Abgas und entfeuchtetem Abgas (ΔT) eingestellt wird.

10. Verfahren zur Kontrolle des Versorgungssystems (3) nach Anspruch 9, **dadurch gekennzeichnet, dass** der Systemdruck (p) minimiert ist.

11. Verfahren zur Kontrolle des Versorgungssystem (3) nach einem der vorhergehenden Ansprüche, mit einem Betriebsmodus, wobei eine Kühlwassertemperatur (T_{KW}(ein)) und das Stellsignal in Abhängigkeit der Temperaturdifferenz zwischen Abgas und entfeuchtetem Abgas (ΔT) eingestellt wird.

12. Verfahren zur Kontrolle des Versorgungssystems nach Anspruch 11, **dadurch gekennzeichnet, dass** zudem die Luftstöchiometrie und/oder der Systemdruck in Abhängigkeit der Temperaturdifferenz zwischen Abgas und entfeuchtetem Abgas (ΔT) eingestellt werden/wird.

13. Warnvorrichtung für ein Versorgungssystem für einen Brennstoffzellenstapel (2) vorzugsweise nach einem der vorhergehenden Ansprüche mit einer bzw. der Entfeuchtungsvorrichtung (7), die angeordnet und/oder ausgebildet ist, um aus dem Brennstoffzellenstapel (2) austretende Abgase zu entfeuchten und dabei in entfeuchtete Abgase umzuwandeln, und mit einer Kontrollvorrichtung (14) zur Erzeugung eines Kontrollsignals, **dadurch gekennzeichnet, dass** das Kontrollsignal auf Basis der Temperaturdifferenz zwischen Abgas und entfeuchtetem Abgas (ΔT) erzeugt wird.

## Claims

1. Supply system (3) for a fuel cell stack (2),
with an adjustable humidification device (13, 8) designed and/or arranged to humidify a supply gas fed to the fuel cell stack (2) in response to a control signal,
with a dehumidification device (7) designed and/or arranged to dehumidify an exhaust gas which is formed from the supply gas fed through the fuel cell stack (2) and to discharge it in the form of a dehumidified exhaust gas,
and with a control device (14) for the generation of the control signal, **characterised in that**
the control device (14) is designed to generate the control signal on the basis of the gas temperature (T_{Abgas}(trocken)) of the dehumidified exhaust gas.

2. Supply system (3) according to claim 1, **characterised in that** the control signal is generated on the basis of the temperature differential (ΔT) between the exhaust gas and the dehumidified exhaust gas.

3. Supply system (3) according to claim 1, **characterised by** a closed- or open-loop multivariable control, so that the control signal is and/or can be generated while using further variables, preferably fuel cell stack temperature (T_{KW}(ein), T_{KW}(aus)), pressure (p), fuel cell stack current output and/or air stoichiometry.

4. Supply system (3) according to any of the preceding claims, **characterised in that** the humidification device (7) and the dehumidification device (8) are designed as gas-to-gas humidifiers (6).

5. Supply system (3) according to any of the preceding claims, **characterised in that** the humidification device (8) comprises an adjusting device (13) which adjusts the humidification in response to the control signal, the adjusting device (13) being designed as a bypass line (12) with a valve device (13).

6. Supply system (3) according to any of the preceding claims, **characterised by** an operating range between 80% and 100% for the relative humidity of the exhaust gas.

7. Supply system (3) according to any of the preceding claims, **characterised in that** a closed loop is provided for the generation of the control signal, the control variable being based on or represented by the gas temperature (T_{Abgas}(trocken)) of the dehumidified exhaust gas and/or the temperature differential (ΔT) between the exhaust gas and the dehumidified exhaust gas.

8. Supply system (3) according to any of the preceding claims, **characterised in that** it is based on programme technology and/or circuit technology for the execution of the method according to the following claims.

9. Method for the control of the supply system (3) according to any of the preceding claims, wherein a coolant temperature (T_{KW}(ein)) of the fuel cell stack (2) is adjusted depending on load and wherein the control signal is adjusted in dependence on the temperature differential (ΔT) between the exhaust gas and the dehumidified exhaust gas.

10. Method for the control of the supply system (3) according to claim 9, **characterised in that** the system pressure (p) is minimised.

11. Method for the control of the supply system (3) according to any of the preceding claims, with an operating mode wherein a coolant temperature (T_{KW}(ein)) and the control signal are adjusted in dependence on the temperature differential (ΔT) between the exhaust gas and the dehumidified exhaust gas.

12. Method for the control of the supply system (3) according to claim 11, **characterised in that** in addition the air stoichiometry and/or the system pressure is/are adjusted in dependence on the temperature differential (ΔT) between the exhaust gas and the dehumidified exhaust gas.

13. Warning device for a supply system for a fuel cell stack (2), preferably according to any of the preceding claims, with an or the dehumidification device (7) designed and/or arranged to dehumidify exhaust gases discharged from the fuel cell stack (2) while converting them into dehumidified exhaust gases, and with a control device (14) for the generation of a control signal, **characterised in that** the control signal is generated on the basis of the temperature differential (ΔT) between the exhaust gas and the dehumidified exhaust gas.

## Revendications

1. Système d'alimentation (3) pour un empilement (2) de pile à combustible qui comprend un dispositif humidificateur ajustable (13, 8) qui est conçu et / ou agencé de manière à humidifier, en fonction d'un signal de réglage, un gaz d'alimentation amené à l'empilement (2) de piles à combustible, un dispositif déshumidificateur (7) qui est conçu et / ou agencé de manière à déshumidifier un gaz de combustion formé par le gaz d'alimentation conduit à travers l'empilement (2) de piles à combustible et à le délivrer en tant que gaz de combustion déshumidifié, ainsi qu'un dispositif de contrôle (14) servant à générer un signal de réglage, **caractérisé en ce que** le dispositif de contrôle (14) est conçu pour générer le signal de réglage sur la base de la température (T_{abgas} (trocken)) du gaz de combustion déshumidifié.

2. Système d'alimentation (3) selon la revendication 1, **caractérisé en ce que** le signal de réglage est généré sur la base de la différence de température (ΔT) entre le gaz de combustion et le gaz de combustion déshumidifié.

3. Dispositif d'alimentation (3) selon la revendication 1 ou 2, **caractérisé par** un système de réglage ou de commande multivariable de sorte que le signal de réglage est généré et / ou puisse être généré à l'aide de plusieurs grandeurs, de préférence la température de l'empilement de pile à combustible (T_{KW}(ein), T_{KW}(aus)), la pression (p), le courant de l'empilement de pile à combustible débité et / ou l'air stoechiométrique.

4. Système d'alimentation (3) selon l'une quelconque des revendications précédentes, **caractérisé en ce que** le dispositif humidificateur (7) et le dispositif déshumidificateur (8) sont conçus comme un humidificateur gaz-gaz (6).

5. Système d'alimentation (3) selon l'une quelconque des revendications précédentes, **caractérisé en ce que** le dispositif humidificateur (8) présente un dispositif de réglage (13) qui règle l'humidification en fonction du signal de réglage, le dispositif de réglage étant conçu comme une conduite de dérivation (12) comportant un système de valve (13).

6. Système d'alimentation selon l'une quelconque des revendications précédentes, **caractérisé par** une plage de travail pour l'humidité relative du gaz de combustion entre 80 % et 100 %.

7. Système d'alimentation (3) selon l'une quelconque des revendications précédentes, **caractérisé en ce qu'**il est prévu un circuit de réglage servant à générer le signal de réglage, la grandeur de réglage se basant sur la température du gaz de combustion déshumidifié (T_{Abgas} (trocken)) et/ou sur la différence de température entre le gaz de combustion et le gaz de combustion déshumidifié (ΔT) ou étant conçue comme celle-ci.

8. Système d'alimentation (3) selon l'une quelconque des revendications précédentes, **caractérisé en ce qu'**en termes de technique de programmation et/ou de technique de circuits il est conçu pour la mise en oeuvre du procédé mentionné dans les revendications suivantes.

9. Procédé pour contrôler le système d'alimentation (3) selon l'une quelconque des revendications précédentes avec un mode de fonctionnement, une température d'eau de refroidissement (T_{KW} (ein)) de l'empilement (2) de pile à combustible étant réglée en fonction de la charge et le signal de réglage étant réglé en fonction de la différence de température entre le gaz de combustion et le gaz de combustion déshumidifié (ΔT).

10. Procédé pour contrôler le système d'alimentation (3) selon la revendication 9, **caractérisé en ce que** la pression du système (p) est réduite à un minimum.

11. Procédé pour contrôler le système d'alimentation (3) selon l'une quelconque des revendications précédentes, avec un mode de fonctionnement, une température d'eau de refroidissement (T_{KW} (ein)) et le signal de réglage étant réglés en fonction de la différence de température entre le gaz de combustion et le gaz de combustion déshumidifié (ΔT).

12. Procédé pour contrôler le système d'alimentation selon la revendication 11, **caractérisé en ce qu'**en outre l'air stoechiométrique et / ou la pression du système est / sont réglé(s) en fonction de la différence de température entre le gaz de combustion et le gaz de combustion déshumidifié (ΔT).

13. Dispositif d'avertissement pour un système d'alimentation pour un empilement (2) de pile à combustible de préférence selon l'une quelconque des revendications précédentes qui comprend un ou le dispositif déshumidificateur (7) qui est disposé et / ou conçu pour déshumidifier les gaz de combustion à la sortie de l'empilement (2) de pile à combustible et de les transformer en gaz de combustion déshumidifiés, et un dispositif de contrôle (14) servant à générer un signal de contrôle, **caractérisé en ce que** le signal de contrôle est généré sur la base de la différence de température entre le gaz de combustion et le gaz de combustion déshumidifié (ΔT).
